# EUROPÄISCHE PATENTSCHRIFT

(11) **EP 1 370 436 B1**
(45) Veröffentlichungstag und Bekanntmachung des Hinweises auf die Patenterteilung: **12.12.2007**
(21) Anmeldenummer: 02740420.1
(22) Anmeldetag: 09.03.2002
(51) Int. Cl.: B60J 10/00, B60J 10/08, F16J 15/06, F16J 15/02

(54) **DICHTUNGSANORDNUNG**
SEAL ARRANGEMENT
ENSEMBLE JOINT

(30) Priorität: 20.03.2001 DE 20104747 U
(43) Veröffentlichungstag der Anmeldung: 17.12.2003
(73) Patentinhaber: Meteor Gummiwerke K.H. Bädje GmbH & Co. KG, 31167 Bockenem (DE)
(72) Erfinder: GENTEMANN, Martin, 31177 Harsum (DE); KOCH, Michael, 37589 Kalefeld (DE)
(74) Vertreter: Sobisch, Peter
(86) Internationale Anmeldenummer: PCT/EP2002/002628
(87) Internationale Veröffentlichungsnummer: WO 2002/078991

(56) Entgegenhaltungen:
- EP-A- 0 479 643
- DE-A- 3 836 687
- DE-A- 19 959 992
- FR-A- 2 696 377
- GB-A- 992 673

## Beschreibung

Die Erfindung bezieht sich auf eine Dichtungsanordnung entsprechend dem Oberbegriff des Anspruchs 1.

Aus den Druckschriften DE 198 03 445, FR 2 520 467, DE 295 13 597 und DE 297 20 053 sind vergleichbare Dichtungsanordnungen bekannt. Diese sind zur Abdichtung des Spaltes zwischen einem relativ zu einer Öffnung eines Kraftfahrzeugs bewegbaren Verschließelement einerseits und der diesem zugekehrten innenseitigen Berandung der Öffnung andererseits bestimmt. Sie bestehen global aus einem zur Befestigung entweder an der inneren Berandung der Öffnung oder der außenseitigen Berandung des Verschließelements eingerichteten Halteteil und einem an diesem angeformten Dichtungsprofil, welches im Schließzustand des Verschließelements an der jeweils gegenüberliegenden Berandung unter elastischer Verformung dichtend anliegt. Eine solche Dichtungsanordnung umgibt die gesamte Öffnung. Wesensmerkmal dieser bekannten Dichtungsanordnungen ist, dass die mit den Halteteilen zusammenwirkenden Randstrukturen der Öffnung oder des Verschließelements eine spezielle Anpassung an das jeweilige Halteteil aufweisen müssen, insbesondere mit Hinblick auf dessen sichere Befestigung. Diese Anpassung kann in einem umlaufenden Flansch bestehen, auf welchen das Halteteil aufgesteckt wird, in einer Folge von Bohrungen, mit denen eine formschlüssige, druckknopfartige Verbindung hergestellt wird oder in speziellen, zum formschlüssigen elastischen Verrasten bestimmten Formelementen.

Aus der DE 199 12 176 ist eine Dichtungsanordnung bekannt, bei der ein im Querschnitt im Wesentlichen L-förmiges Profilteil mit einer eingebetteten Armierung über eine Kleberschicht mit einem Türrahmen verklebt ist. Das Profilteil stützt sich jenseits der Kleberschicht mit Stegen auf dem Türrahmen ab. Anstelle der Kleberschicht kann das Profilteil auch durch Clipsverbindungen am Rahmen gehalten sein, die durch Eindrücken herstellbar sind (Spalte 2, Zeile 61 bis 64). Dieses Profilteil soll zunächst durch einen Handhabungsautomaten mit dem Türrahmen verbunden werden. In einem zweiten, vorzugsweise von Hand durchzuführenden Arbeitsschritt wird dann eine Profildichtung mit einem Aufsteckfuß auf einen hoch stehenden Montageschenkel des Profilteils mit tannenbaumartiger Profilierung aufgesteckt Die Profildichtung ist innen nicht mit dem L-förmigen Profilteil verbunden. Im Betrieb kann es dort zu optisch ungünstige Spalten und Verläufen der Profildichtung kommen. Gleiches gilt für die weiteren, oben bereits vorgestellten Ausführungsformen bekannter Dichtungsanordnungen.

Aus der Druckschrift US 4,119,325 ist eine Dichtungsanordnung bekannt, bei welcher zur Befestigung eines Dichtungsprofils an einem Türrahmen eine aus Kunststoff bestehende Fassungsschiene verwendet wird, welche auf ihrer, dem Dichtungsprofil zugekehrten Seite zwei, quer zu ihrer Längserstreckung im Abstand voneinander angeordnete Rastbereiche aufweist, die zur elastischen Verrastung mit dem Haltebereich des Dichtungsprofils bestimmt sind. Der Haltebereich bildet einen global T-förmig gestalteten Rastfuß, der in eine komplementär unter Mitwirkung eines U-förmig ausgebildeten Verriegelungsteils geformte Nut eingesetzt ist. Die Fassungsschiene ist zum Aufsetzen auf die Berandung der Tür eines Behälters bestimmt und mit diese seitlich umgreifenden Halteflanschen versehen, die an der Türe eine dichtende Anlage bilden. Das Dichtungsprofil seinerseits ist durch zwei, an der innenseitigen Berandung der Öffnung anliegende Dichtlippen gekennzeichnet, so dass sich auch im Schließzustand der Tür ein durch ein Nebeneinander der Fassungsschiene und des Profilteils gekennzeichneter, optisch wahrnehmbarer Verlauf der Dichtungsanordnung ergibt. Dadurch, dass ein besonderes U-förmiges Verriegelungstell zur Bildung einer T-förmig gestalteten Nut erforderlich ist, ergibt sich ferner eine mechanisch verhältnismäßig kompliziert gestaltete Befestigung des Dichtungsprofils an der Fassungsschiene. In Abhängigkeit von der werkstofflichen Ausbildung dieser Teile kann dies Nachteile für die Beständigkeit der Dichtwirkung mit sich bringen.

Schließlich ist aus der EP 0 479 643 eine gattungsgemäße, dem Oberbegriff des Anspruchs 1 entsprechende Dichtungsanordnung bekannt. Diese ist zur Dichtung eines Spaltes zwischen zwei zusammenwirkenden Bauteilen bestimmt und u.a. dadurch gekennzeichnet, dass sie über eine Fassungsschiene bzw. einer Fußplatte an dem einen der Bauteile festlegbar ist, wobei mit der Fassungsschiene ein Haltebereich eines Dichtungsprofils formschlüssig verrastbar ist, wobei an dem Haltebereich ein mit dem anderen der Bauteile abdichtend zusammenwirkender Dichtbereich des Dichtungsprofils befestigt ist, wobei die Fassungsschiene zwei im Abstand voneinander angeordnete Rastbereiche aufweist, deren jeder mit einem komplementär geformten Gegenrastbereich des genannten Haltebereichs verrastbar ist, wobei die genannten ersten und zweiten Rastbereiche an Längskanten der Fassungsschiene vorgesehen sind und wobei sich beide Rastbereiche entlang einer inneren Längskante des Rastfußes erstrecken. Die genannte Fußplatte besteht aus einem Material nach Art eines Heißschmelzklebers, welches durch Beheizung mit einem Träger, beispielsweise einem Teil einer Kraftfahrzeugkarosserie verklebbar ist. Beide Rastbereiche werden durch ein T-förmiges, an der Fußplatte angeformtes Profil gebildet, welches sich in einem mittigen Bereich der Fußplatte befindet. Somit ist diese Dichtungsanordnung durch lediglich einen mittigen, verhältnismäßig schmalen Montage- und Befestigungsbereich gekennzeichnet.

Es ist vor diesem Hintergrund die Aufgabe der Erfindung, eine gattungsgemäße Dichtungsanordnung unter Vermeidung der dem Stand der Technik anhaftenden Nachteile hinsichtlich des Sitzes und der Abdichtwirkung zu verbessern. Gelöst ist diese Aufgabe durch die Merkmale des Kennzeichnungsteils des Anspruchs 1.

Der Dichtbereich des Profils ist vorzugsweise schlauchförmig ausgebildet. Durch die Rastverbindung der Rastbereiche und der Gegenrastbereiche miteinander ist ein sicherer Halt des Profils an der Fassungsschiene auch bei rauhem Betrieb gewährleistet. Bei Beschädigung des Profils lassen sich diese Rastverbindungen mit geringem Aufwand wieder lösen und ein neues Profil mit der an Ort und Stelle verbleibenden Fassungsschiene verrasten. Zunächst kann an einem der Bauteile die Fassungsschiene festgelegt und dann das Profil mit der Fassungsschiene verrastet werden. Es können aber auch zunächst Profil und Fassungsschiene miteinander verrastet und anschließend diese vormontierte Baugruppe an einem der Bauteile festgelegt werden. Dadurch, dass ein erster und ein zweiter Rastbereich an Längskanten der Fassungsschiene vorgesehen sind, wobei ein erster Rastbereich entlang einer äußeren Längskante der Fassungsschiene ausgebildet ist, ist eine besonders große Montagebasis des Profils an der Fassungsschiene sowie ein entsprechend sicherer Halt des Profils gegeben: Durch die erfindungsgemäße erste Dichtlippe ist ein einwandfreier seitlicher Abschluss des Haltebereichs und eine gute Abdichtung gegenüber dem die Dichtungsanordnung tragenden ersten Bauteil gegeben. In ähnlicher Weise ist durch die erfindungsgemäße zweite Dichtlippe ein optisch gefälliger und insbesondere dichter äußerer Abschluss des Profils gegenüber dem ersten Bauteil gegeben.

Insbesondere dadurch, dass zwei Rastbereiche vorgesehen sind, wobei ein erster Rastbereich an einer äußeren Längskante der Fassungsschiene ausgebildet ist und wobei im Abstand von diesem ersten Rastbereich etwa in der Quermitte der Fassungsschiene ein dritter Rastbereich angeordnet ist und dass mit dem ersten und dritten Rastbereich zu einem Rastfuß zusammengefasste Gegenrastbereiche des Haltebereichs verrastbar sind, kann der feste Halt des Profils an der Fassungsschiene verbessert werden. Der Begriff "außen" bezieht sich hier beispielsweise auf die Außenseite eines Kraftfahrzeugs.

Die Merkmale des Anspruchs 2 erleichtern und verbessern die Positionierung der Fassungsschiene an dem ersten Bauteil.

Gemäß Anspruch 3 ist die Verrastung des Haltebereichs an seiner Innenseite erleichtert und verbessert.

Die Merkmale des Anspruchs 4 führen zu einer Fassungsschiene von ausreichender Steifigkeit, Festigkeit und Formstabilität.

Gemäß Anspruch 5 wird zwischen den Stützrippen und dem ersten Bauteil eine besonders gute Dichtwirkung erzielt.

Gemäß Anspruch 6 ist einerseits eine schnelle und sichere Befestigung der Fassungsschiene as dem ersten Bauteil gewährleistet und andererseits verhindert, dass Feuchtigkeit durch die Bohrungen hindurchtreten kann.

Die Merkmale des Anspruchs 7 sind dann von besonderern Vorteil, wenn die Einbausituation für die Fassungsschiene dreidimensional verläuft. Dann kann man der Fassungsschiene gleich in dem Formwerkzeug diese dreidimensionale Formgestaltung geben und für einen zwängungsfreien Anbau der Fassungsschiene an das erste Bauteil sorgen.

Gemäß Anspruch 8 kann man kostengünstig dann vorgehen, wenn die Einbausituation für die Fassungsschiehe im Wesentlichen zweidimensional ist. Die Clips können dann nachträglich an die Fassungsschiene angeklebt oder als Kunststoffclips an die Fassungsschiene angeschweißt werden.

Die Merkmale des Anspruchs 9 sorgen für einen besonders stabilen Halt des Profils an der Fassungsschiene. Gleichzeitig ist für eine günstige Dichtwirkung bei geringen Schließkräften für das erste Bauteil gegenüber dem zweiten Bauteil gesorgt.

Je nach Einsatzfall kann man auch gemäß den Merkmalen der Ansprüche 10 oder 11 vorgehen.

Diese und weitere Merkmale und Vorteile der Erfindung werden nachfolgend anhand der in den Zeichnungen dargestellten Ausführungsbeispiele der Erfindung näher erläutert. Es zeigen:
Fig. 1 einen Querschnitt durch eine erste Ausführungsform einer montierten Dichtungsanordnung,
Fig. 2 einen entsprechenden Querschnitt durch eine andere Dichtungsanordnung und
Fig. 3 einen Querschnitt durch einen Teil einer wiederum anderen Dichtungsanordnung.

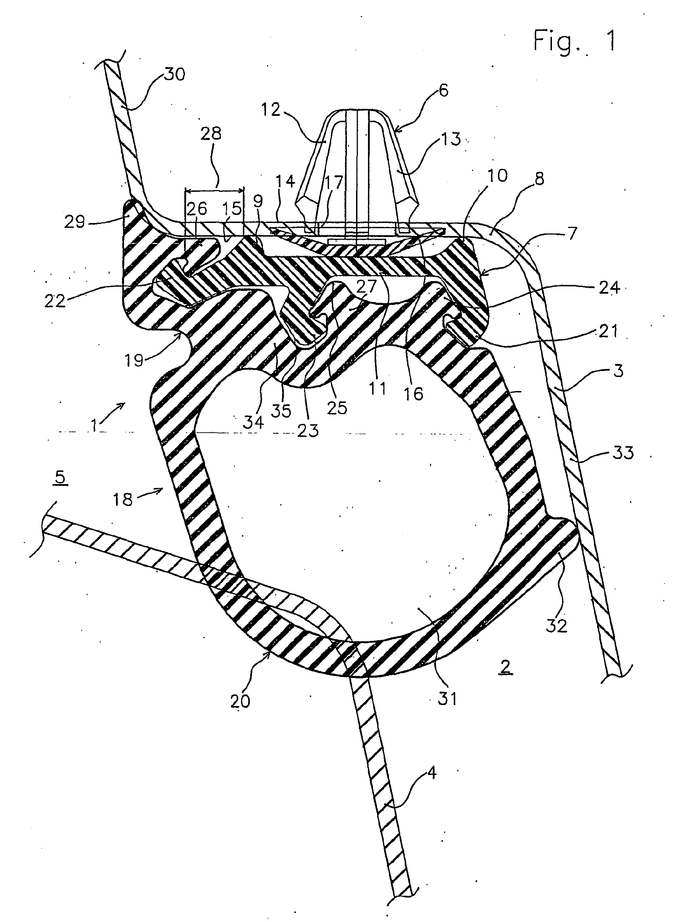

Fig. 1 zeigt eine Dichtungsanordnung 1 für einen Spalt 2 zwischen einem ersten Bauteil 3 und einem zweiten Bauteil 4. Bei dem ersten Bauteil 3 handelt es sich um ein Verschließelement, wie z.B. eine Tür oder eine Klappe eines Kraftfahrzeugs. Das zweite Bauteil 4 wird in Fig. 1 durch einen Rand einer zu verschließenden Öffnung 5 des Kraftfahrzeugs gebildet, wobei der Rand Bestandteil eines Schwellers des Kraftfahrzeugs ist. Die Dichtungsanordnung 1 kann sich nicht nur gemäß Fig. 1 entlang dem Boden der Tür 3, sondern rings um die Öffnung 5 herum erstrecken.

An dem ersten Bauteil 3 ist durch im Abstand voneinander angeordnete Clips 6 eine Fassungsschiene 7 festgelegt. Da ein unteres Anschlussblech 8 des ersten Bauteils 3 im Wesentlichen geradlinig verläuft, kann die Fassungsschiene 7 zweidimensional ausgebildet und aus Kunststoff extrudiert sein. Als Kunststoff eigenen sich z.B. Polyoximethylen (POM), Polyamid (PA) oder ein thermoplastisches Elastomer (TPE) einer Härte von 40 bis 80 Shore D.

Stützrippen 9 und 10 sind an eine Basis 11 der Fassungsschiene 7 angeformt und werden durch federnde Schenkel 12 und 13 des Clips 6, die sich auf einer oberen Seite 14 des Anschlussblechs 8 abstützen, zur Anlage an einer unteren Seite 15 des Anschlussblechs 8 gezogen. Jeder Clip 6 ist mit einem Dichtteller 16 an der Basis 11 angeschweißt oder angeklebt. Jeder Clip 6 wird durch eine Bohrung 17 in dem Anschlussblech 8 von unten hindurchgesteckt, bis die Schenkel 12, 13 oberhalb der oberen Seite 14 nach außen in ihre Betriebsstellung schwenken können. In dieser Betriebsstellung liegt ein äußerer Rand des Dichttellers 16 abdichtend an der unteren Seite 15 an und verhindert, dass Feuchtigkeit durch die Bohrung 17 hindurchtritt.

Statt des in Fig. 1 dargestellten besonderen Clips 6 können auch andere, an sich bekannte Cliptypen mit gleichem Vorteil und ähnlicher Funktion verwendet werden.

Außer der Fassungsschiene 7 weist die Dichtungsanordnung 1 noch ein Profil 18 mit einem Haltebereich 19 und einem Dichtbereich 20 auf. Quer zu einer Längserstreckung des Profils 18 im Abstand voneinander ist die Fassungsschiene 7 mit einem ersten Rastbereich 21, einem zweiten Rastbereich 22 und einem dritten Rastbereich 23 versehen. Jeder dieser Rastbereiche 21 bis 23 ist widerhakenartig ausgebildet. Mit jedem Rastbereich 21 bis 23 ist ein komplementär geformter Gegenrastbereich 24, 25 und 26 des Haltebereichs 19 verrastbar, wie dies in Fig. 1 im Endzustand dargestellt ist. Die Gegenrastbereiche 24, 25 sind zu einem Rastfuß 27 zusammengefasst, der mit dem ersten Rastbereich 21 und dem dritten Rastbereich 23 verrastet ist.

Der zweite Rastbereich 22 ist an einer inneren Längskante der Fassungsschiene 7 ausgebildet und in einem Querabstand 28 von der inneren Stützrippe 9 angeordnet. Durch den Querabstand 28 ist ein Raum geschaffen, in den der Gegenrastbereich 26 des Haltebereichs 19 eingedrückt werden und verrastend einschnappen kann. An diesen inneren Gegenrastbereich 26 ist eine erste Dichtlippe 29 angeformt. Die erste Dichtlippe 29 legt sich bei eingerastetem Gegenrastbereich 26 gemäß Fig. 1 abdichtend an einen aufsteigenden Fortsatz 30 des Anschlussblechs 8 an.

Der Dichtbereich 20 ist insgesamt schlauchförmig mit einem Hohlraum 31 ausgebildet und an den Haltebereich 19 angeformt. Der Dichtbereich 20 trägt außen und im Abstand von der Fassungsschiene 7 eine zweite Dichtlippe 32, die in dem montierten Zustand der Dichtungsanordnung 1 gemäß Fig. 1 dichtend mit einem absteigenden Fortsatz 33 des Anschlussblechs 8 zusammenwirkt. Diese Abdichtwirkung nimmt noch zu, wenn die Tür 3 geschlossen und der Dichtbereich 20 durch den stationären Schweller 4 komprimiert wird. So wird also besonders nachdrücklich verhindert, dass bei geschlossener Tür 3 Feuchtigkeit in Fig. 1 von außen, also von rechts, an der Dichtungsanordnung 1 vorbei durch den Spalt 2 in die Öffnung 5 gelangen kann. In diesem komprimierten Zustand des Dichtbereichs 20 liegt außerdem ein massiver Wulst 34 des Haltebereichs 19 an der in Fig. 1 linken Rückseite 35 des dritten Rastbereichs 23 an. Dies wirkt einem unbeabsichtigten Lösen des Rastfußes 27 aus seiner Verrastung mit den Rastbereichen 21, 23 entgegen.

Bei der Montage der Dichtungsanordnung 1 wird vorzugsweise so vorgegangen, dass zunächst die Fassungsschiene 7 entweder zweidimensional oder dreidimensional an dem ersten Bauteil 3 festgelegt wird. Sodann wird der Rastfuß 27 in den Raum zwischen dem ersten Rastbereich 21 und dem zweiten Rastbereich 22 eingedrückt und dort verrastet. Danach wird die erste Dichtlippe zusammen mit dem Gegenrastbereich 26 hochgeschwenkt und der Gegenrastbereich 26 in den im Bereich des Querabstands 28 bestehenden Raum eingedrückt, bis der Gegenrastbereich 26 sich mit dem zweiten Rastbereich 22 sicher verrastet hat. Damit ist die Dichtungsanordnung 1 betriebsbereit. Wenn das Profil 18 beschädigt wurde, kann es ohne Beschädigung der Fassungsschiene 7 wieder von der Fassungsschiene 7 abgezogen und auf dem beschriebenen Montageweg durch ein neues Profil 18 ersetzt werden.

Im Fall der Fig. 1 besteht das Profil 18 als sogenanntes Monoprofil vollständig aus Weichgummi einer Härte von 40 bis 70 Shore A. Das Profil 18 kann jedoch auch vollständig aus TPE der gleichen Härte extrudiert sein. Wichtig ist, dass bei diesen Ausführungsformen für das Profil 18 eine Härte gewählt wird, die einerseits genügend festen Sitz im Haltebereich 19 und andererseits genügend Elastizität im Dichtbereich 20 für erträgliche Schließkräfte der Tür 3 besitzt.

In allen Zeichnungsfiguren sind gleiche Teile mit gleichen Bezugszahlen versehen.

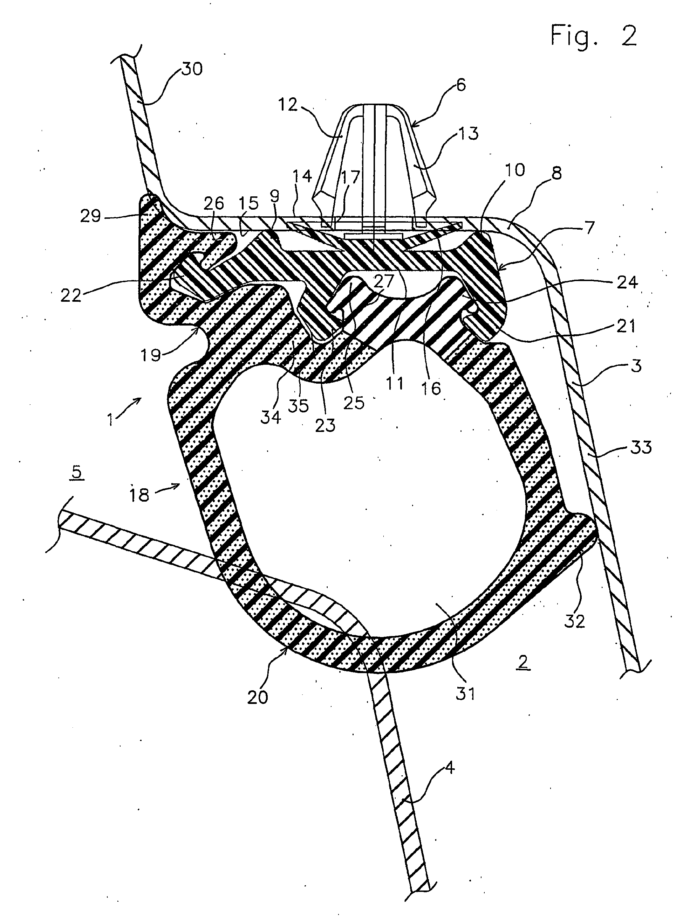

Bei dem Ausführungsbeispiel nach Fig. 2 wurde die Fassungsschiene in einem Formwerkzeug dreidimensional spritzgeformt. Die Clips 6 bestehen vorzugsweise aus dem gleichen Kunststoff wie die Fassungsschiene 7 und wurden in dem Formwerkzeug an die Fassungsschiene 7 angespritzt. Der Rastfuß 27 besteht aus Weichgummi einer Härte von 50 bis 80 Shore A. Der Rastfuß könnte auch aus einem entsprechend harten TPE gefertigt sein. In Fig. 2 ist der Rest des Profils 18 aus Moosgummi einer Härte von 15 bis 45 Shore A zusammen mit dem Rastfuß 27 koextrudiert. Statt des Moosgummis könnte auch ein geschäumtes TPE der gleichen Härte verwendet werden.

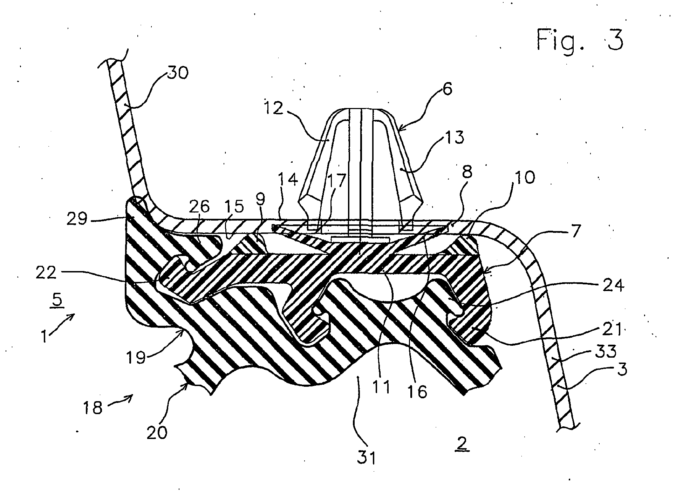

Bei dem Ausführungsbeispiel nach Fig. 3 ist nur der obere Teil der Ausführungsbeispiele nach den Fig. 1 und 2, allerdings vergrößert, dargestellt. Das Profil 18 besteht aus Weichgummi einer Härte von 40 bis 70 Shore A. Die Fassungsschiene 7 wurde im Formwerkzeug dreidimensional aus Kunststoff, z.B. TPE, einer Härte von 40 bis 80 Shore D gespritzt. In dem Formwerkzeug wurden auch die Clips 6 mit angespritzt und außerdem die Stützrippen 9, 10 aus einem vergleichsweise weichen TPE einer Härte von 30 bis 50 Shore A mit angespritzt.

## Patentansprüche

1. Dichtungsanordnung (1) für einen Spalt (2) zwischen zwei zusammenwirkenden Bauteilen (3,4), z.B. einem Verschlusselement wie z.B. einer Tür (3) oder einer Klappe eines Kraftfahrzeugs und einem Rand (4) einer zu verschließenden Öffnung (5),
wobei an einem ersten (3) der Bauteile (3,4) eine Fassungsschiene (7) festlegbar ist,
wobei mit der Fassungschiene (7) ein Haltebereich (19) eines Profils (18) formschlüssig verrastbar ist,
wobei an dem Haltebereich (19) ein mit einem zweiten (4) der Bauteile (3,4) abdichtend zusammenwirkender Dichtbereich (20) des Profils (18) befestigt ist,
wobei die Fassungsschiene (7) aus Kunststoff hergestellt und wenigstens zwei quer zu einer Längserstreckung des Profils (18) im Abstand voneinander angeordnete Rastbereiche (21 bis 23) aufweist,
wobei mit jedem Rastbereich (21 bis 23) ein komplementär geformter Gegenrastbereich (24 bis 26) des Haltebereichs (19) verrastbar ist,
und wobei ein erster (21) und ein zweiter Rastbereich (22) an Längskanten der Fassungsschiene (7) vorgesehen sind,
wobei an einem inneren Gegenrastbereich (26) des Haltebereichs (19) eine erste, mit dem die Dichtungsanordnung (1) tragenden ersten Bauteil (3) dichtend zusammenwirkende Dichtlippe (29) angeformt ist und
und wobei an den Dichtbereich (20) außen und im Abstand von der Fassungsschiene (7) eine zweite; mit dem die Dichtungsanordnung (1) tragenden ersten Bauteil (3) dichtend zusammenwirkende zweite Dichtlippe (32) angeformt ist.
**dadurch gekennzeichnet, dass** an einer äußeren Längskante der Fassungsschiene (7) der erste Rastbereich (21) ausgebildet ist,
dass im Abstand von dem ersten Rastbereich (21) etwa in der Quermitte der Fassungsschiene (7) ein dritter Rastbereich (23) angeordnet ist,
und dass mit dem ersten (21) und dem dritten Rastbereich (23) zu einem Rastfuß (27) zusammengefasste Gegenrastbereiche (24,25) des Haltebereichs (19) verrastbar sind.

2. Dichtungsanordnung nach Anspruch 1,
**dadurch gekennzeichnet, dass** die Fassungsschiene (7) eine die Rastbereiche (21 bis 23) tragende Basis (11) aufweist und
dass die Basis (11) über zwei in einem Querabstand voneinander parallel zur Längserstreckung des Profils (18) verlaufende Stützrippen (9,10) an dem ersten Bauteil (3) abgestützt ist.

3. Dichtungsanordnung nach Anspruch 2,
**dadurch gekennzeichnet, dass** an einer inneren Längskante der Fassungsschiene (7) der zweite Rastbereich (22) ausgebildet ist, und
dass der zweite Rastbereich (22) in einem Querabstand (28) von einer inneren Stützrippe (9) angeordnet ist.

4. Dichtungsanordnung nach einem der Ansprüche 1 bis 3,
**dadurch gekennzeichnet, dass** die Fassungsschiene (7) aus Polyoxymethylen (POM), Polyamid (PA) oder einem thermoplastischen Elastomer (TPE) einer Härte von 40 bis 80 Shore D besteht.

5. Dichtungsanordnung nach einem der Ansprüche 1 bis 4,
**dadurch gekennzeichnet, dass** die Stützrippen (9,10) aus vergleichsweise weichem TPE einer Härte von 30 bis 50 Shore A bestehen und an die Basis (11) angeformt sind.

6. Dichtungsanordnung nach einem der Ansprüche 2 bis 5,
**dadurch gekennzeichnet, dass** die Fassungsschiene (7) zwischen den Stützrippen (9,10) im Abstand voneinander angeordnete, jeweils durch eine Bohrung (17) in dem ersten Bauteil (3) drückbare Clips (6) aufweist.

7. Dichtungsanordnung nach Anspruch 6,
**dadurch gekennzeichnet, dass** die Fassungsschiene (7) in einem Formwerkzeug spritzgeformt ist, und
dass die Clips (6) aus Kunststoff bestehen und in dem Formwerkzeug an die Fassungsschiene (7) angespritzt sind.

8. Dichtungsanordnung nach Anspruch 6,
**dadurch gekennzeichnet, dass** die Fassungsschiene extrudiert ist und
dass die Clips (6) an der Fassungsschiene (7) befestigt sind.

9. Dichtungsanordnung nach einem der Ansprüche 1 bis 8,
**dadurch gekennzeichnet, dass** der Rastfuß (27) aus Weichgummi oder einem TPE einer Härte von 50 bis 80 Shore A und der Rest des Profils (18)
aus Moosgummi oder einem geschäumtem TPE einer Härte von 15 bis 45 Shore A koextrudiert sind.

10. Dichtungsanordnung nach einem der Ansprüche 1 bis 8,
**dadurch gekennzeichnet, dass** das Profil (18) aus Weichgummi oder einem TPE einer Härte von 40 bis 70 Shore A extrudiert ist.

11. Dichtungsanordnung nach einem der Ansprüche 1 bis 8,
**dadurch gekennzeichnet, dass** das Profil (18) aus Moosgummi oder einem geschäumten TPE einer Härte von 15 bis 45 Shore A extrudiert ist.

## Claims

1. Sealing arrangement (1) for a gap (2) between two cooperating components (3, 4), e.g. a closing element such as e.g. a door (3) or a hinged lid of a motor vehicle, and an edge (4) of an opening (5) which is to be closed,
wherein a grip rail (7) can be fixed to a first one (3) of the components (3, 4),
wherein a holding region (19) of a profile (18) can be positively latched to the grip rail (7),
wherein a sealing region (20) of the profile (18) which cooperates in a sealing manner with a second one (4) of the components (3, 4) is attached to the holding region (19),
wherein the grip rail (7) is produced from synthetic material and comprises at least two latching regions (21 to 23) which are disposed transversely with respect to a longitudinal extension of the profile (18) at a mutual spaced interval,
wherein a complementary counter latching region (24 to 26) of the holding region (19) can be latched to each latching region (21, 23),
and wherein a first (21) and a second latching region (22) are provided on longitudinal edges of the grip rail (7),
wherein a first sealing lip (29) which cooperates in a sealing manner with the first component (3) which supports the sealing arrangement (1) is integrally formed on an inner counter latching region (26) of the holding region (19), and
wherein a second sealing lip (32) which cooperates in a sealing manner with the first component (3) which supports the sealing arrangement (1) is integrally formed on the sealing region (20) externally and at a spacing from the grip rail (7),
**characterized in that** the first latching region (21) is formed on an outer longitudinal edge of the grip rail (7),
that a third latching region (23) is disposed at a spaced interval from the first latching region (21) approximately in the transverse center of the grip rail (7),
and that counter latching regions (24, 25) of the holding region (19) which are combined to form a latching base (27) can be latched to the first (21) and to the third latching region (23).

2. Sealing arrangement as claimed in claim 1,
**characterized in that** the grip rail (7) comprises a base (11) which supports the latching regions (21 to 23), and
that the base (11) is supported on the first component (3) by way of two support ribs (9, 10) which extend at a mutual transverse spaced interval in parallel with respect to the longitudinal extension of the profile (18).

3. Sealing arrangement as claimed in claim 2,
**characterized in that** the second latching region (22) is formed on an inner longitudinal edge of the grip rail (7), and
that the second latching region (22) is disposed at a transverse spaced interval (28) from an inner support rib (9).

4. Sealing arrangement as claimed in any one of claims 1 to 3,
**characterized in that** the grip rail (7) consists of polyoxy methylene (POM), polyamide (PA) or of a thermoplastic elastomer (TPE) with a Shore D hardness of 40 to 80.

5. Sealing arrangement as claimed in any one of claims 1 to 4,
**characterized in that** the support ribs (9, 10) consist of comparatively soft TPE with a Shore A hardness of 30 to 50 and are integrally formed on the base (11).

6. Sealing arrangement as claimed in any one of claims 2 to 5,
**characterized in that** the grip rail (7) comprises clips (6) which are disposed between the support ribs (9, 10) at a mutual spaced interval and can be pressed in each case through a bore (17) in the first component (3).

7. Sealing arrangement as claimed in claim 6,
**characterized in that** the grip rail (7) is injection-molded in a molding tool, and
that the clips (6) consist of synthetic material and are injected on to the grip rail (7) in the molding tool.

8. Sealing arrangement as claimed in claim 6,
**characterized in that** the grip rail is extruded, and
that the clips (6) are attached to the grip rail (7).

9. Sealing arrangement as claimed in any one of claims 1 to 8,
**characterized in that** the latching base (27) is co-extruded from soft rubber or a TPE with a Shore A hardness of 50 to 80 and the rest of the profile (18) is co-extruded from cellular rubber or a foamed TPE with a Shore A hardness of 15 to 45.

10. Sealing arrangement as claimed in any one of claims 1 to 8,
**characterized in that** the profile (18) is extruded from soft rubber or a TPE with a Shore A hardness of 40 to 70.

11. Sealing arrangement as claimed in any one of claims 1 to 8,
**characterized in that** the profile (18) is extruded from cellular rubber or a foamed TPE with a Shore A hardness of 15 to 45.

## Revendications

1. Dispositif d'étanchéité (1) pour une fente (2) entre deux composants (3, 4) coopérant, par exemple un élément de fermeture tel qu'une porte (3) ou un clapet d'un véhicule automobile et un bord (4) d'une ouverture (5) à fermer, dans lequel
un rail de support (7), peut être fixé sur un premier composant (3) des composants (3, 4)
une zone de retenue (19) d'un profilé (18) peut être encliquetée par correspondance de formes avec le rail de support (7),
une zone d'étanchéité (20) du profilé (18) coopérant de manière étanche avec un deuxième (4) des composants (3, 4), est fixée sur la zone de retenue (19),
le rail de support (7) est fabriqué en matière synthétique et présente au moins deux zones d'encliquetage (21 à 23) disposées transversalement à un axe longitudinal du profilé (18), à distance l'une de l'autre,
une zone d'encliquetage antagoniste (24 à 26) formée de manière complémentaire de la zone de retenue (19) peut être encliquetée avec chaque zone d'encliquetage (21 à 23),
et une première (21) et une seconde (22) zones d'encliquetage sont prévues sur des arêtes longitudinales du rail de support (7),
une première lèvre d'étanchéité (29) coopérant de manière étanche avec le premier composant (3) portant le dispositif d'étanchéité (1) étant formée sur une zone d'encliquetage antagoniste (26) intérieure de la zone de retenue (19), et
une seconde lèvre d'étanchéité (32) coopérant de manière étanche avec le premier composant (3) portant le dispositif d'étanchéité (1) étant formée sur la zone d'étanchéité (20) à l'extérieur et à distance du rail de support (7),
**caractérisé en ce que** la première zone d'encliquetage (21) est formée sur une arête longitudinale extérieure du rail de support (7),
**en ce qu'**une troisième zone d'encliquetage (23) est disposée transversalement à distance de la première zone d'encliquetage (21), à peu près à mi-largeur du rail de support (7),
et **en ce que** des zones d'encliquetage antagonistes (24, 25) de la zone de retenue (19) groupées en une base d'encliquetage (27) peuvent être encliquetées avec la première (21) et la troisième zones d'encliquetage (23).

2. Dispositif d'étanchéité selon la revendication 1,
**caractérisé en ce que** le rail de support (7) présente une base (11) portant les zones d'encliquetage (21 à 23) et
**en ce que** la base (11) est appuyée contre le premier composant (3) par le biais de deux nervures-supports (9, 10) distantes transversalement l'une de l'autre et s'étendant parallèlement à l'axe longitudinal du profilé (18).

3. Dispositif d'étanchéité selon la revendication 2,
**caractérisé en ce que** la deuxième zone d'encliquetage (22) est formée sur une arête longitudinale intérieure du rail de support (7), et
**en ce que** la deuxième zone d'encliquetage (22) est disposée transversalement à distance (28) d'une nervure-support (9) intérieure.

4. Dispositif d'étanchéité selon l'une quelconque des revendications 1 à 3,
**caractérisé en ce que** le rail de support (7) se compose de polyoxyméthylène (POM) de polyamide (PA) ou d'un élastomère thermoplastique (TPE) d'une dureté de 40 à 80 Shore D.

5. Dispositif d'étanchéité selon l'une quelconque des revendications 1 à 4,
**caractérisé en ce que** les nervures-supports (9, 10) se composent de TPE relativement souple d'une dureté de 30 à 50 Shore A et sont formées sur la base (11).

6. Dispositif d'étanchéité selon l'une quelconque des revendications 2 à 5,
**caractérisé en ce que** le rail de support (7) présente entre les nervures-supports (9, 10) des clips (6) disposés à distance l'un de l'autre et susceptibles d'être enfoncés par pression au travers d'un perçage (17) respectif, dans le premier composant (3).

7. Dispositif d'étanchéité selon la revendication 6,
**caractérisé en ce que** le rail de support (7) est moulé par injection dans un outil de formage, et
**en ce que** les clips (6) sont en matière synthétique et sont moulés par injection dans l'outil de formage sur le rail de support (7).

8. Dispositif d'étanchéité selon la revendication 6,
**caractérisé en ce que** le rail de support est extrudé et
**en ce que** les clips (6) sont fixés sur le rail de support (7).

9. Dispositif d'étanchéité selon l'une quelconque des revendications 1 à 8,
**caractérisé en ce que** la base d'encliquetage (27) en caoutchouc mou ou en un TPE d'une dureté de 50 à 80 Shore A et le reste du profilé (18) en caoutchouc mousse ou en un TPE expansé d'une dureté de 15 à 45 Shore A sont coextrudés.

10. Dispositif d'étanchéité selon l'une quelconque des revendications 1 à 8,
**caractérisé en ce que** le profilé (18) en caoutchouc mou ou en un TPE d'une dureté de 40 à 70 Shore A est extrudé.

11. Dispositif d'étanchéité selon l'une quelconque des revendications 1 à 8,
**caractérisé en ce que** le profilé (18) en caoutchouc mousse ou en un TPE expansé d'une dureté de 15 à 45 Shore A est extrudé.
